# EUROPEAN PATENT APPLICATION

(11) **EP 4 549 100 A1**
(43) Date of publication of application: **07.05.2025**
(21) Application number: 24210111.1
(22) Date of filing: 31.10.2024
(51) Int. Cl.: B25J 9/12, B25J 15/02, B25J 19/00

(54) **ARTICULATED ROBOT FOR HANDLING WORKPIECES**

(30) Priority: 31.10.2023 IT 202300022920
(71) Applicant: Martini, Walter, 35010 Borgoricco (PD) (IT)
(72) Inventor: MARTINI, Walter, 35012 Camposampiero (PD) (IT)
(74) Representative: Caldon, Giuliano

(57) **Abstract**

Articulated robot for moving pieces (100) to be machined, comprising a support structure (2) on which a terminal arm (10) is mounted, a grip device (3) mounted on the terminal arm (10), and hydraulic actuation means (4), connected to the grip device (3) in order to actuate it, by means of a pressurized liquid, to pass between a clamping configuration and a release configuration.

The terminal arm (10) comprises a support portion (11) and a rotatable portion (12), rotatably constrained to the support portion (11) and carrying the grip device (3) mounted thereon, and an actuation motor in order to rotate the rotatable portion (12) around the rotation axis (Z).

The terminal arm (10) comprises a rotating joint (40), interposed between the support portion (11) and the rotatable portion (12) and comprising a central shaft (41) actuatable by the actuation motor in order to rotate around the rotation axis (Z), and an external jacket (42) fixed to the support portion (11) and placed around the central shaft (41) coaxial with the rotation axis (Z), and the central shaft (41) is rotatably inserted in the external jacket (42) in order to be able to rotate around the rotation axis (Z).

The rotating joint (40) comprises an internal distribution circuit (5) traversed by the operative liquid and extended through the external jacket (42) and the central shaft (41) between an inlet opening (50), made on the external jacket (42) and hydraulically connected to the actuation means (4), and an outlet opening (51), made on the central shaft (41) and hydraulically connected to the grip device (3). The external jacket (42) comprises multiple rings (420) coaxial with the rotation axis (Z), aligned one after the other along the rotation axis (Z) and sealingly packed with each other.

## Description

### Field of application

The present invention regards an articulated robot for moving pieces to be machined, according to the preamble of the independent claim 1.

The present robot is advantageously employable in order to support and move pieces (mainly metallic) at a processing station, which is provided with a tool adapted to execute processing on the corresponding piece supported by the robot.

More in detail, the present robot is employable in order to support the piece at mills, grindstones, planers etc. in order to be able to execute different types of mechanical processing on the aforesaid pieces, e.g. removal processing, in particular milling and deburring.

Therefore, the present invention is inserted in the industrial field of production of industrial automatisms for mechanical processing, in particular for aid devices for deburring and material removal operations in general.

### State of the art

Following the production of metal components it is often, if not always, necessary to carry a step of filming the piece, in which the produced piece is further machined in order to allow obtaining a satisfactory final finish.

Such operations are in particular necessary following production processes via melting, molding, or removal of material. For example, following such production processes, the produced pieces must have the possible residue burrs removed (operation known as deburring), and there is often the need to carry out operations of frosting, polishing, grinding, etc. before the subsequent introduction on the market.

For such purpose, known on the market are various machines which allow automating such filming operations, by employing an automated tool (so-called with numerical control), which is configured for receiving a digital map of the path to be completed in order to carry out the working of the piece. More in detail, in such machines, the piece to be machined is firmly fixed on a work surface, for example by means of ad hoc brackets, so as to prevent movements of the piece during the working thereof. Such numerical control machines comprise one or more tools (for example mills, grindstones or abrasive discs and brushes), and a logic control unit by means of which an operator sets a work program, by means of insertion of the spatial coordinates relative to the geometry of the piece in order to determine a path that the tool must follow. The tools are then moved along the aforesaid path, in order to carry out working on the piece.

Such machines nevertheless have several drawbacks. First of all, such machines are extremely costly and complicated in the attainment thereof, since they require the use of numerous mechanical joints adapted to allow the simultaneous actuation and movement of the tools during working. In addition, such machines have proven poorly adaptable to pieces with dimensions quite different from each other, since they are hard to reconfigure to operate both on small-size pieces (e.g. small metal parts) and large-size pieces.

In addition, such machines have a limited precision due to the size tolerances of the various pieces to be treated, with the consequent risk of damaging the tool in the case of oversizing the piece, and of not at all executing the processing in the case of under-sizing of the same.

In addition, such machines often require the presence of an operator in proximity to the machine, in order to allow loading, unloading and especially modifying the position of the piece on the brackets in order to obtain a complete processing.

For the purpose of improving the precision of the aforesaid processing, solutions were employed that provide for maneuvering the piece, simultaneously maintaining the tool fixed. Such solutions in particular provide for manipulating the piece by means of an automated robot.

More in detail, the robots of known type are provided with articulated arms, articulated to each other, in order to allow freely moving the piece to be machined around the tool, in order to increase the flexibility and versatility in the execution of the operations.

Such arms are hinged to each other and rotatably connected, so as to allow the movement and rotation of the piece (in particular around the extension axis of the arm itself).

Such robots of known type are also provided with a grip element with pneumatic actuation, which is fixed to one end of an articulated arm, and is movable between a grip position, in which it grasps and maintains the piece, and a release position, in which it releases the piece at the end of the processing. In particular, in order to allow the pneumatic actuation of the grip element, the robots of known type comprise a duct for supplying the pressurized air, which is laterally mounted on the articulated arm provided with the grip element, so as to allow the movement of the grip element between a grip position and a release position, following the introduction or lack of introduction of pressurized air.

Such robots of known type have in practice shown that they do not lack drawbacks.

The main drawback of the robots of the prior art consists of the fact that such robots are not adapted to support the piece in an optimal manner for all the different processing types, in particular without having the dismantle and reassemble the piece to be machined.

Indeed, the pneumatic joints employed in the conventional robots usually allow a partial and incomplete rotation of the piece around their extension axis. This is due to the fact that the total and continuous rotation of the piece is prevented by the presence of the same duct for supplying the pressurized air, which would be twisted following a complete rotation (greater than or equal to 360°) of the articulated arm.

A further drawback of the aforesaid robot lies in the fact that such robots are not adapted to operate on pieces to be machined of high weigh, for example greater than 100 kg.

A further drawback of the aforesaid robot lies in the fact that such robots do not allow adjusting, in a quick and precise manner, all the grip elements and the relative force with which these must clamp the piece to be machined.

For the purpose of preventing the supply duct of the pressurized air from being accidentally coupled to obstacles present in the work area, where the articulated arm of the robot is installed, robots are known which are provided, between the articulated arm and the gripping gripper, with a rotating joint (of the type described for example in the prior art patents US 7559590, EP 2149439 and US 2020246984) shaped as a winding bobbin for the duct for supplying the air that feeds the gripper, for the purpose of actuating it. The rotating joint shaped as a bobbin comprises a rotating central hub, which carries the gripper mounted thereon, and an external jacket, which is fixed to the latter section of the articulated arm, is laterally provided with a passage opening traversed by the air supply duct (which is extended starting from the final section of the articulatable arm before traversing the external jacket) and delimits, with the central hub, an annular housing chamber which contains a plurality of turns of the air supply duct wound around the central hub itself. Even if the rotating joint shaped as a bobbin prevents the air supply duct from being accidentally coupled to obstacles, containing it nearly completely inside the suitable housing chamber, such rotating joint has numerous drawbacks. Indeed, the rotating joint has a maximum possible rotation (beyond which the air supply duct is broken) which depends on the number of turns of the air supply duct wound around the central hub and by the width of such turns. Therefore, in order to confer, to the rotating joint shaped as a bobbin, a maximum possible rotation also equal to only two or three complete turns, it is necessary to employ air supply ducts that are particularly long and external jackets that are particularly bulky and heavy. In addition, the gripper mounted on the central hub of the rotating joint shaped as a bobbin, being pneumatically actuation, is not adapted to lift pieces to be machined with high weight, for example greater than 100 Kg.

### Presentation of the invention

In this situation, the problem underlying the present invention is therefore that of overcoming the drawbacks manifested by the machines and robots for mechanical processing of known type, by providing a robot for mechanical processing which allows manipulating a piece to be machined in a price and quick manner.

A further object of the present invention is to provide a robot which allows manipulating pieces of high weight, in particular greater than 100 kg.

A further object of the present invention is to provide a robot that is compact and easy to mount and maintain.

A further object of the present invention is to provide a robot that is safe and reliable in use.

A further object of the present invention is to provide a robot which is structurally simple and inexpensive to attain.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:

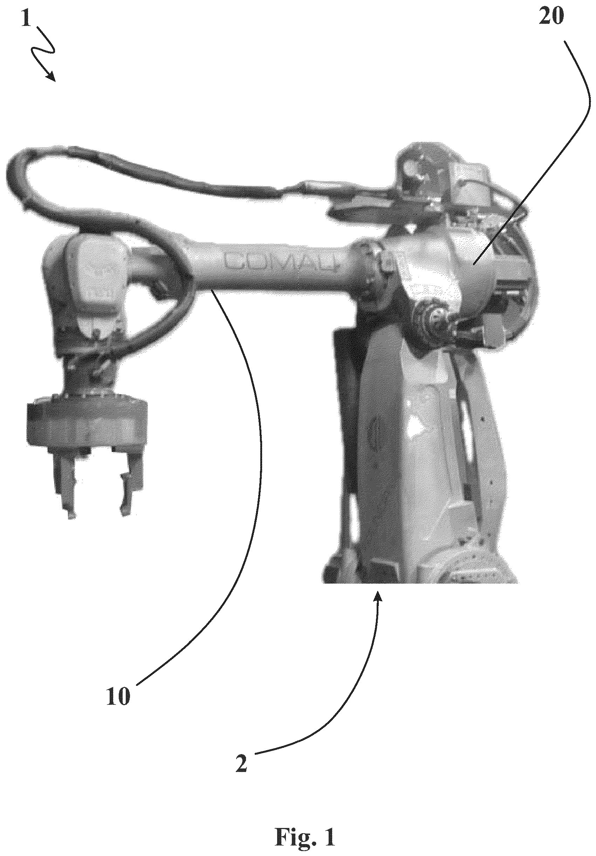

- figure 1 shows a perspective view of the articulated robot, object of the present invention;
- figure 2 shows a perspective view of a terminal arm and a rotating joint of the robot of figure 1;
- figure 3 shows a sectional view of the rotating joint of figure 2 and of a grip device of the articulated robot of figure 1;

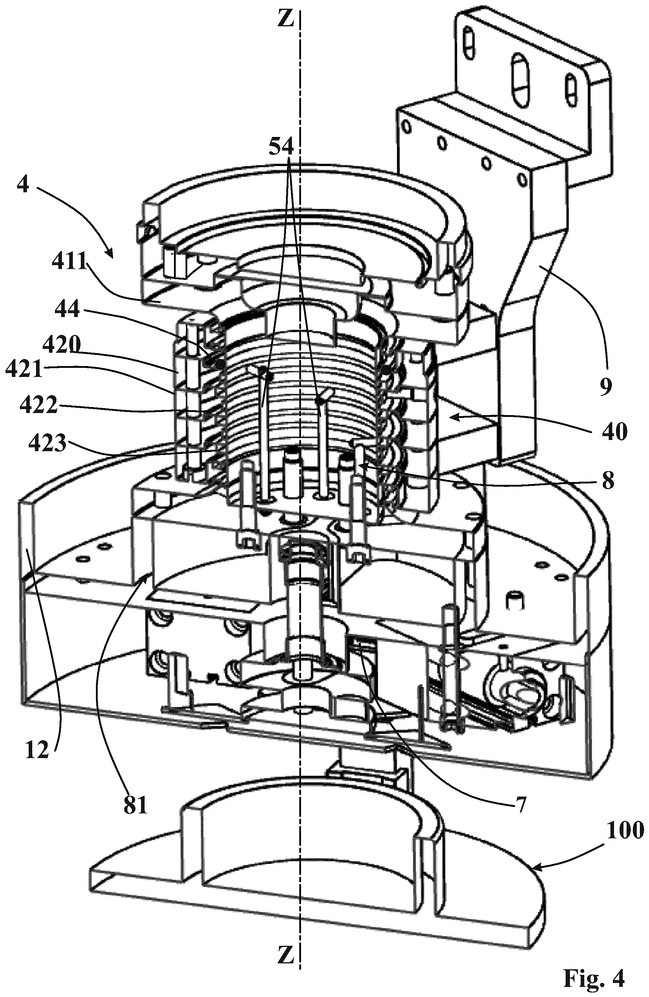

- figure 4 shows a sectional perspective view of the terminal arm of figure 2;
- figure 5 shows a sectional view of the rotating joint of figure 2;
- figure 6 shows a sectional perspective view of the grip device of the articulated robot of figure 1;

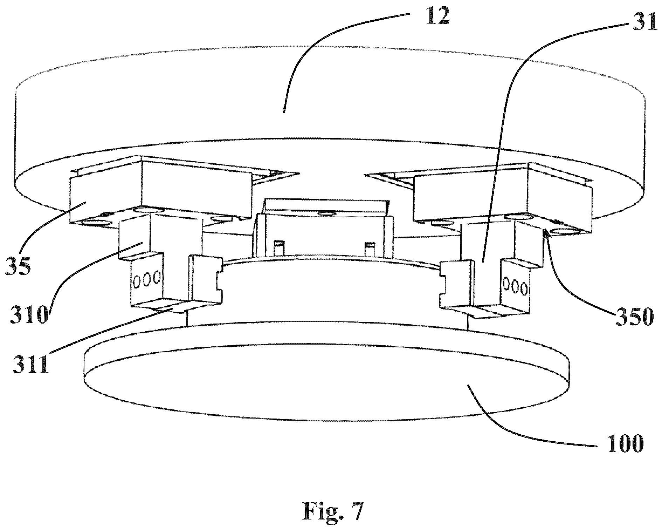

- figure 7 shows a bottom view of the grip device of figure 6.

### Detailed description of a preferred embodiment

With reference to the enclosed drawings, reference number 1 overall indicates an articulated robot intended to be employed for moving pieces 100 to be machined, in particular metal pieces (e.g. pieces made of cast iron). More in detail, the robot 1 is employable for retaining and moving such pieces 100 to be machined at one or more tools in order to execute a specific mechanical processing, such as for example a deburring processing, removal of material etc. Of course, the aforesaid articulated robot 1 can be employed for moving the piece 100 in order to execute further operations.

The articulated robot 1 for moving pieces 100 to be machined, object of the present invention, comprises a support structure 2 and a terminal arm 10, which is extended along an extension axis X between a first end 10', constrained to the support structure 2, and an opposite second end 10".

Advantageously, the support structure 2 comprises a base platform, which is intended to be fixed to the ground or to a wall.

The terminal arm 10 can be directly connected to the support structure 2 (in particular to the base platform), or alternatively it can be connected to the latter by means of a further articulated portion, which is in such case mechanically connected to the support structure 2 and to the terminal arm 10, in particular to the first end 10 of the latter.

Preferably, the terminal arm 10 is provided with at least one first articulation 20, such as for example a ball joint or a hinge element, placed at the first end 10 thereof, in order to allow the movement of the terminal arm 10 with respect to the support structure 2. In particular, by means of the first articulation 20 the terminal arm 10 can rotate with respect to the support structure 2, around a rotation axis R substantially orthogonal to the extension axis X.

Advantageously, the terminal arm 10 is connected to the articulated portion by means of the aforesaid first articulation 20, while the articulated portion is in turn connected to the support structure 2 by means of a second articulation 21, in order to allow further movements of the terminal arm 10 with respect to the support structure 2, and therefore ensure greater flexibility of the articulated robot 1.

Preferably, the second articulation 21 in turn comprises a ball joint or a hinge element.

Of course, the first articulation 20 (like the possible second articulation 21) of the articulated arm 10 can be of a different type, depending on the different use and employment requirements of the articulated robot 1. By way of example, the first articulation 20 is preferably selected from among: a rotatable articulation (such as for example spherical, cardan joint or planar), a linear articulation (e.g. telescopic),a rotational-translational articulation (which combines a rotation around an axis with a linear movement along the same axis).

In particular the selection of the articulations allows varying the number of degrees of freedom according to which the articulated robot 1 is capable of moving the piece 100. The articulated robot 1 also comprises a grip device 3, with hydraulic actuation, mounted on the second end 10" of the terminal arm 10.

As better described hereinbelow, the grip device 3 is a device of the type adapted to grasp one or more pieces 100 to be machined, and is for such purpose a gripper or pincer device, which allows firmly retaining the piece 100 during the movement and processing of the latter.

In addition, the articulated robot 1 comprises hydraulic actuation means 4, operatively connected to the grip device 3 and arranged for actuating, by means of a pressurized liquid (preferably oil) the grip device 3 to pass between a clamping configuration, in which the grip device 3 grasps a piece 100, and a release configuration, in which the grip device 3 releases the piece 100.

More in detail, the device 3 can be a clamping device, of the type with grippers or jaws 31, which is therefore provided with at least two grip elements (jaws 31) which are adapted to be mutually moved in order to grasp and release a piece 100 interposed therebetween. In such case, in the clamping configuration the grip device 3 is in a closed configuration, with the grip elements placed approached, while in the release configuration the grip device 3 is in an open configuration, with the grip elements placed spaced.

Alternatively, the device 3 can be a bracket device of wedge type, therefore provided with two wedge-shaped movable elements, which are in particular employable for retaining pieces 100 provided with a central opening. In such case, on the contrary, in the clamping configuration the grip elements are placed spaced, in abutment against an internal surface of the piece 100, while in the release configuration the grip elements are placed approached to each other and spaced from the same internal surface of the piece. Advantageously, the grip device 3 can be actuated between multiple intermediate clamping configurations, depending on the degree of force required for retaining the piece 100 to be machined and/or dimensions of the piece 100 itself.

The terminal arm 10 comprises a support portion 11, which is mechanically connected, at the first end 10', to the support structure 2, preferably by means of the first articulation 20, and a rotatable portion 12, which is rotatably constrained to the support portion 11, around a rotation axis Z substantially parallel to the extension axis X. The rotatable portion 12 carries the grip device 3 mounted thereon, at the second end 10" of the terminal arm 10.

In this manner, the grip device 3 is rotatable with respect to the support portion 11 of the terminal arm 10, and hence with respect to the support structure 2 to which the support portion 11 of the terminal arm 10 is connected.

In addition, the articulated robot 1 comprises at least one actuation motor (not illustrated in the enclosed figures) which is mechanically connected to the rotatable portion 12 in order to actuate it to rotate around the rotation axis Z.

Advantageously, the actuation motor is mounted on a portion which is not integral in rotation with the rotatable portion 12, for example being mounted on the support portion 11 or, preferably, on the support structure 2.

In the event in which the actuation motor is mounted on the support structure 2, the robot comprises transmission means for transmitting the motion imparted by the actuation motor to the rotatable portion 12. For example, the aforesaid transmission means can be conical wheels, coupled together in order to transfer the motion from a first direction (determined by the rotor of the actuation motor), to a second direction, transverse to the first direction and parallel to the rotation axis Z.

Preferably, the actuation motor is a direct current electric motor of brushless type, however without departing from the protective scope of the present invention, the actuation motor can be a different type, for example a hydraulic motor. Advantageously, the articulated robot 1 comprises multiple actuation motors, one for each section of the articulated arm comprised between two articulations (or between the base platform and the first articulation 20).

According to the idea underlying the present invention, the terminal arm 10 comprises a rotating joint 40, which mechanically connects the support portion 11 of the terminal arm 10 to the rotatable portion 12 of the terminal arm 10 and hydraulically connects the hydraulic actuation means 4 to the grip device 3 in order to allow the flow of the liquid between the actuation means 4 and the grip device 3.

Preferably, the rotating joint 40 is completely made of stainless steel, capable of withstanding working environments that are subject to the presence of corrosive agents (e.g. washing liquids for the pieces 100 to be machined).

The rotating joint 40 comprises a central shaft 41, which is extended longitudinally along the rotation axis Z between a first end 41' connected to the actuation motor and a second end 41" fixed to the rotatable portion 12, and actuatable by the actuation motor in order to rotate around the rotation axis Z.

Advantageously, the actuation motor is configured for allowing the rotatable portion 12 (and consequently the grip device 3 connected to the latter) to rotate around the rotation axis Z.

In addition, the rotating joint 40 comprises an external jacket 42 fixed to the support portion 11 and placed around the central shaft 41 coaxial with the rotation axis Z, and such central shaft 41 is rotatably inserted in the external jacket 42 in order to be able to rotate around the rotation axis Z.

In addition, the rotating joint 40 comprises an internal distribution circuit 5 susceptible of being traversed by the operative liquid (preferably pressurized oil), which is extended through the external jacket 42 and the central shaft 41, between at least one inlet opening 50, which is made on the external jacket 42 and is hydraulically connected to the actuation means 4, and at least one outlet opening 51, which is made on the central shaft 41 and is hydraulically connected to the grip device 3. In this manner, the distribution circuit 5 places the actuation means 4 in hydraulic communication with the grip device 3, in order to feed the latter by means of the pressurized liquid (preferably oil).

The internal extension of the distribution circuit 5 (passing through the central shaft 41 and the external jacket 42 of the rotating joint 40) also allows reducing the bulk and increasing the solidity and safety of the robot 1, since it reduce to a minimum the presence of external channels and tubes, bulky and not very safe.

The actuation means 4 advantageously comprise an oil-pressure pump, preferably placed upstream of the terminal arm 10, which is advantageously mounted on the support structure 2 of the robot 1.

Advantageously, the aforesaid oil-pressure pump is arranged for pumping pressurized oil through the internal distribution circuit the inlet opening 50, towards the grip device 3 in order to actuate the latter between the release and clamping configurations.

The external jacket 42 comprises multiple rings 420, which are placed, coaxial with the rotation axis Z, aligned one after the other along the rotation axis Z and sealing stacked one after the other.

In this manner it is possible to obtain an articulated robot 1 that is easy to mount, since the arrangement of the external jacket 42 divided into rings 420 allows a quick assembly of the joint 40, in addition to the maintenance and substitution operations of the grip device 3.

In addition, the articulated robot 1 is advantageously capable of moving heavy pieces 100 to be machined, e.g. with weight greater than 100 kg, since the combination of the actuation means 4 and the oil-pressure internal distribution circuit 5 allow the grip device 3 to exert a high retention fore on the piece 100 to be machined, approximately equal to about 1000 kg.

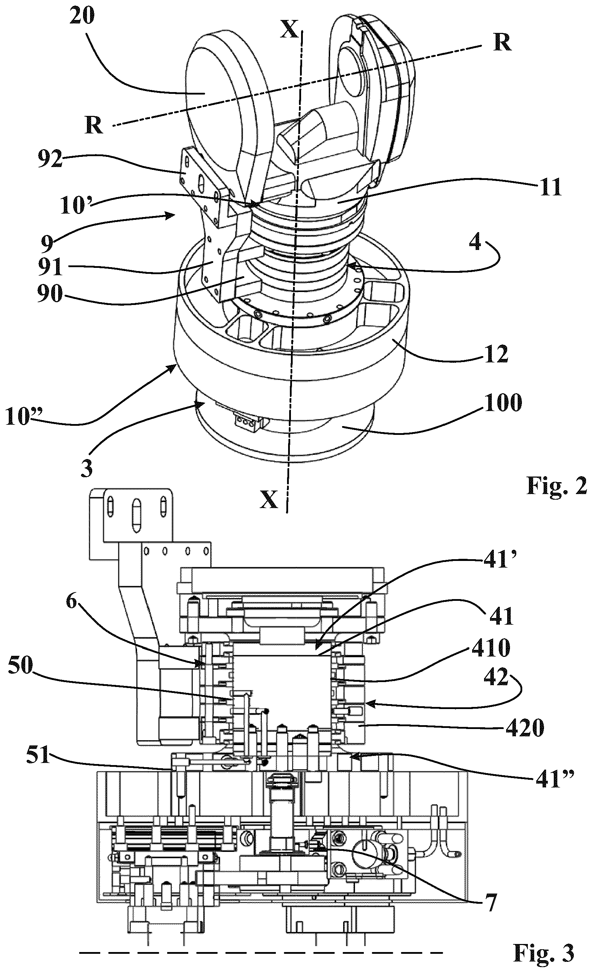

Advantageously, as illustrated in figure 2, the robot 1 comprises a bracket 9, which is placed to connect between the external jacket 42 and the support portion 11, in order to constrain the external jacket 42 to the latter. In this manner, the external jacket 42 is substantially fixed during the rotation of the central shaft 41.

More in detail, the bracket 9 is fixed to at least one of the rings 420 that compose the external jacket 42, in particular at an external surface thereof. For such purpose, the bracket 9 comprises an attachment portion 90 which is provided with a concave attachment surface, substantially counter-shaped with respect to the external surface of the ring 420 to which it is fixed.

Preferably, the bracket 9 comprises two separate attachment portions 90 (one upper and one lower), which are spaced the extension axis X and are fixed to respective rings 420. Advantageously, the two attachment portions 90 are fixed to the two end rings 420 of the external jacket 42, i.e. to the rings 420 that define an upper and lower end of the latter, in this manner allowing constraining also the central rings 420, interposed between the end rings.

Indeed, as set forth above, the rings 420 are sealing stacked one against the next, exerting a friction force with respect to each other such to prevent the mutual rotation of the rings 420 even in the event in which only the end rings 420 are directly fixed on the support portion 11.

As is visible in figure 2, the two attachment portions 90 is extended substantially orthogonal to the extension axis X and are connected to each other by a connector portion 91, which is extended substantially parallel to the extension axis X, and which is preferably extended beyond the upper attachment portion 90, towards the first end 10' of the articulated arm 10.

Advantageously, the bracket 9 also comprises a fixing portion 92, which is fixed (in a single body and otherwise) to the connector portion 91 and to the support portion 11 (e.g. by means of screws or bolts).

Advantageously, regarding the total reduction of the bulk (as is visible in figure 3), the articulated arm 10 has a reduced diameter at the rotating joint 40, and the fixing portion 92 therefore preferably has an L-shaped body which is extended with a first section 92' moving away (orthogonal to the extension axis X) from the connector portion 91, and a second section 92" placed transversely (preferably orthogonal) with respect to the aforesaid first section.

In this manner, it is possible to firmly fix the rotating joint 40 to the support portion 11, and prevent the rotation of the external jacket 42 when the central shaft 41 is actuated in rotation around the rotation axis Z.

At the same time, it is also possible to actuate the grip device 3 to rotate around the rotation axis Z for a turn/complete angle (360°) multiple times according to a same rotation sense (clockwise or counterclockwise), without the risk of twisting of the pipes that convey fluids (in particular the pressurized liquid and compressed air, as described more in detail hereinbelow).

This is due to the fact that the actuation motor is configured for rotating the (more internal) central shaft 41 with respect to the external jacket 42, determining a substantial static nature of the ducts for supplying the pressurized liquid which are connected to the external jacket 42.

Advantageously, each ring 420 is provided with an internal annular surface 421, directed towards the central shaft 41, and an external annular surface 422, opposite the internal annular surface 421 and directed towards the exterior.

Advantageously, as set forth above, the internal distribution circuit 5 is extended through the rotating joint 40, passing both through the external jacket 42 and through the central shaft 41. In particular, at least one of the rings 420 of the external jacket 42 is provided with the at least one inlet opening 50, which is extended in a through manner between the external annular surface 422 and the internal annular surface 421 of the ring 420. Of course, it is possible to also provide for further inlet openings 50, which are spaced along the extension axis X and are preferably placed on separate rings 420.

Advantageously, the central shaft 41 is in turn provided with a lateral surface 410 which delimits, with the internal annular surface 421 of the ring 420, at least one annular chamber 53 of the internal distribution circuit 5 which is hydraulically connected to the inlet opening 50.

Advantageously, the distance between the internal annular surface 421 and the lateral surface 410, which determines the width of the annular chamber 53, is comprised between 1 and 5 mm, in a manner such to reduce the bulk of the rotating joint 40. Advantageously, the internal distribution circuit 5 also comprises an internal channel 54 which is extended between a first opening, made on the (external) lateral surface 410 of the central shaft 41, and the outlet opening 51.

In particular, the first opening of the internal channel 54 is directed towards the annular chamber 53 in order to place the inlet opening 50 in hydraulic communication with the outlet opening 51.

Operatively, the operative liquid flows through the external jacket 42, passing through the inlet opening 50, towards the annular chamber 53, in order to then traverse the first opening made on the lateral surface 410 of the central shaft 41, flowing through the internal channel 54 up to the outlet opening 51.

Advantageously, the annular chamber 53 allows storing the operative liquid and maintaining the inlet opening 50 and the outlet opening 51 in constant hydraulic communication during its supply during the relative rotation between the central shaft 41 and the external jacket 42.

Advantageously, the outlet opening 51 is placed at the second end 41" of the central shaft 41. More in detail, the outlet opening 51 is placed on a lower face of the central shaft 41, which is directed towards the grip device 3.

More in detail, the internal channel 54 is advantageously provided with a first section, which is extended radially from the first opening towards the center of the central shaft 41, and a second section, which is extended substantially orthogonal to the first section in order to convey the pressurized liquid towards the outlet opening 51 placed at the second end 41" of the central shaft 41.

Advantageously, the first section is made via milling starting from the lateral surface 410 of the central shaft 41, and is preferably provided with a passage diameter substantially equal to the diameter of the inlet opening 50. Advantageously, the second section is made via milling starting from the lower face of the central shaft 41 up to encountering the aforesaid first section.

Preferably, the diameter of the second section is equal to the diameter of the first section (and consequently, the outlet opening 51 is advantageously provided with the same diameter of the inlet opening 50).

Preferably the extension of the first section is smaller than the extension of the second section, in a manner such to make an internal channel 54 in proximity to the circumferential zone of the central shaft 41, maintaining the internal zone of the central shaft 41 free of channels and therefore free of structural weakening.

According to the preferred embodiment of the present invention, the internal distribution circuit 5 is provided with multiple inlet openings 50, preferably made at separate rings 420.

In such a manner, the internal distribution circuit 5 is provided with at least two annular chambers 53, each hydraulically connected with a respective internal channel 54 and terminating in a corresponding outlet opening 51.

In particular, as described more in detail hereinbelow, a first internal channel 54 is employed in order to convey the pressurized liquid and activate the grip device 3 to pass from the release configuration to the clamping configuration, and a second internal channel 54 is employed for suctioning the aforesaid pressurized liquid and for bringing the grip device 3 back into the release configuration. Preferably, the aforesaid two annular chambers 53 are hydraulically isolated from each other.

According to an alternative embodiment of the present invention, not represented in the enclosed figures, only one ring 420 is provided with the inlet opening 50, and the internal distribution circuit 5 is only employed for bringing the grip device 3 into the clamping configuration (and maintaining it during the movement and the processing of the piece 100).

Advantageously, the rotating joint 40 comprises multiple annular gaskets 44, each of which being preferably interposed, sealingly tight, between two adjacent rings 420. Advantageously, each annular chamber 53 is interposed between two annular gaskets 44. Advantageously, the annular gaskets 44 are O-rings, preferably placed annularly in abutment against the central shaft 41. In particular, each annular gasket 44 encloses the central shaft 41 for the entire circumference thereof, in order to prevent leakage of oil between two adjacent annular chambers 53. Advantageously, the annular gaskets 44 allow employing a high pressure inside the internal distribution circuit 5 without compromising the safety of the articulated robot 1 and of the users around it, and preventing oil leakage to the outside of the rotating joint 40, which would involve frequent interruptions of the operations of processing of the pieces 100 moved by the articulated robot 1.

Advantageously, the annular gaskets 44 are made of polymer material, e.g. rubber (in particular EPDM), even if however it is possible to use different materials, as long as they are capable of resisting pressures on the order of magnitude of hundreds of bars. Advantageously, each ring 420 of the external jacket 42 is extended, parallel to the extension axis X, between a first upper annular face 420A, directed towards the first end 10' of the articulated arm 10, and a second lower annular face 420B, directed towards the second end 10" of the articulated arm 10.

Advantageously in addition, at least the central rings 420 (i.e. interposed between the two upper and lower end rings) are provided with a steplike annular seat 423, which is preferably made on the first annular face 420A, and in which an annular gasket 44 is housed. Advantageously, the aforesaid annular seat 423 is laterally open and laterally faces the central shaft 41, towards the lateral surface 410 thereof, such that the annular gasket 44 can be placed in abutment against the latter.

More in detail, the steplike annular seat 423 is laterally delimited by a rib, which is extended projectingly from the first annular face 420A, along the circumferential extension of the ring 420. Preferably, the aforesaid rib is placed in proximity to the internal annular surface 421.

Advantageously, the first annular face 420A of each ring 420 is placed in abutment against the second annular face 420B of the adjacent ring 420, with the annular gasket 44 interposed between these. For such purpose, the second annular face 420B has a groove such to allow the shape coupling with the rib present on the first annular face 420A of the adjacent ring 420.

The aforesaid shape coupling between the circumferential rib and the corresponding groove of two adjacent rings 420 (as well as for the entire stack of rings 420) allows constraining the rings 420 along radial movement directions (orthogonal to the extension axis X), allowing the mutual movement between the rings 420 only parallel to the same extension axis X (along a stacking direction).

Advantageously in addition, the external jacket 42 of the rotating joint 40 comprises two end rings 425, between which the rings 420 are placed, and tie rod means 6, placed to mechanically connect the two end rings 425 and adapted to pull the end rings 425 towards each other, retaining the rings 420 packed between the end rings 425.

More in detail, the external jacket 42 comprises an upper end ring 425, directed towards the first end 10' of the articulated arm 10, and a lower end ring 425, directed towards the second end 10" of the articulated arm 10, and which are stacked (together with the rings 420 with the latter interposed) to form the entire ring structure of the external jacket 42.

Advantageously, the end rings 425 are provided with diameter and thickness substantially equivalent to those of the above-described rings 420. Advantageously, the end rings 425 lack inlet openings 50.

Advantageously, the end rings 425 and the rings 420 are each provided with multiple through holes, each of which aligned with the corresponding through holes of the other rings, so as to define a passage along the entire external jacket 42. In particular, the tie rod means 6 comprise multiple retention rods 60, each of which extended between two opposite ends 60', 60" fixed to the corresponding end rings 425, and each ring 420. As set forth above, each ring 420 is advantageously provided with multiple passage holes, extended in a through manner parallel to the rotation axis Z between the first annular face 420A and the second annular face 420B, and traversed by a corresponding retention rod 60.

Preferably, the end rings 425 are also provided with a passage hole, of which one hole is counter-shaped with respect to the head of the retention rod 60, at the lower end 60", directed towards the grip device 3, and the other hole is advantageously counter-shaped with respect to the end of the retention rod 60, at the upper end 60', as is visible in the figure 2.

Advantageously, at least one of the passage holes is threaded, and the retention rods 60 are inserted via screwing in the at least one of the passage holes.

Optionally, the retention rod 60 is extended projectingly beyond the upper end 60' and is fixed by means of a nut at the upper part to the end ring 425.

Preferably, the passage holes are made in portions of the rings 420 and of the end rings 425 close to the external annular surface 422.

In this manner it is first of all possible to assemble the pack of rings 420 and end rings 425, sequentially inserting the gaskets 44 without forcing them into the respective annular seat 423, and subsequently screwing the retention rods 60 in order to adjust the level of compression between the rings 420 and the end rings 425.

Advantageously, the rotating joint 40 comprises at least two annular bearings 45, preferably ball or roller bearings, each of which placed around the rotation axis Z and is interposed between the corresponding end ring 425 and the central shaft 41. Advantageously, the arrangement of the aforesaid bearings 45 allows reducing the friction between the external jacket 42 and the central shaft 41 when the latter is actuated in rotation.

Preferably, in addition, the bearings 45 are placed in abutment against the external surface of the central shaft 41. In particular, in a per se known manner, the bearings 45 are formed by two rings concentric to each other with interposed a series of rollers or balls, in which the external ring of the bearing 45 is placed in contact against the second annular face 420B of the corresponding end ring 425, while the internal ring is placed to be in contact against the lateral surface 410 of the central shaft 41.

Advantageously, the rotating joint 40 comprises at least one attachment flange 400, which is fixed to the second end 41" of the central shaft 41, carries the grip device 3 mounted thereon and preferably is extended, transverse to the rotation axis Z, with width greater than the diameter of the external jacket 42.

Advantageously, the robot 1 comprises at least one casing, which is fixed to the attachment flange 400 and is extended below the latter. Preferably, the aforesaid casing has a cylindrical form and is advantageously internally hollow, so to be able to at least partly house of the grip device 3, protecting from impact and from dirt (dust, oil etc.) has in the external environment. In particular, in the casing, the actuation components of the grip elements (e.g. jaws 31) are advantageously housed, such as for example possible hydraulic actuators described in detail hereinbelow, while on the contrary the aforesaid grip elements are placed outside of the casing (also better described hereinbelow), which are intended to describe the piece 100 to be machined.

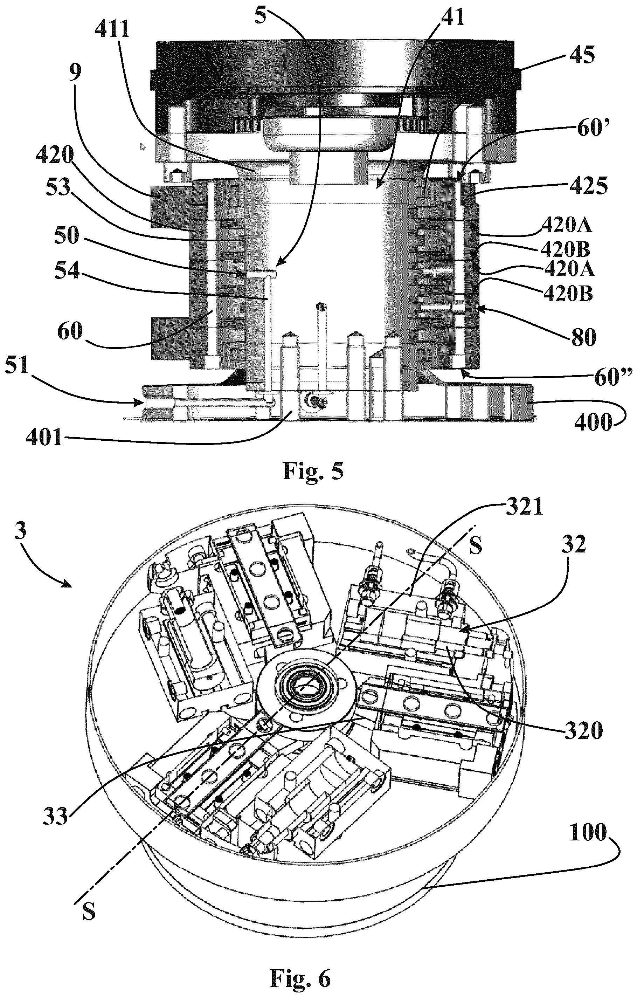

Advantageously, the attachment flange 400 has circular plan and comprises a attachment portion, fixed to the grip device 3 by means of two or more fixing pins 401, as is visible in figure 5 and a tapered portion extended from the attachment portion in order to mechanically connect the latter to the second end 41" of the central shaft 41.

This can simplify the installation and the fixing of the grip device 3 to the rotating joint 40, allowing a greater versatility in the selection and positioning of the grip device 3. Indeed, the arrangement of a suitably sized attachment flange 400 allows reducing the weight and the overall size of the rotating joint 40 without compromising the strength and the performances thereof, overall obtaining a rotating joint 40 that is more compact and more efficient overall.

In addition, the wider sizing of the attachment flange 400 of the external jacket 42 allows safely and stably connecting together the rotating joint 40 and the grip device 3.

Advantageously, in addition, the attachment flange 400 contributes to reducing the wear of the external jacket 42 and of the other parts of the rotating joint 40, preventing the latter from coming into contact with discard residues generated during the working of the piece 100.

According to one embodiment variant, depicted in figure 5, of the above-described embodiments, (which respectively provide for one or two annular chambers 53), the outlet opening 51 is made on a lateral edge of the attachment flange 400, and the internal channel 54 is therefore provided with a third section, extended radially from the interior of the attachment flange 400 in order to hydraulically connect the second section to the outlet opening 51.

Analogous to that set forth above for the first and the second section, also the third section is preferably made via milling and is advantageously hydraulically connected to the second section by means of a 90° elbow.

Advantageously, at the aforesaid 90° elbow, the internal distribution circuit 5 is provided with a junction gasket, housed in a seat preferably made on the attachment flange 400.

Still according to such embodiment variant, the pressurized liquid is conveyed to the grip device 3 by means of flexible pipes (not depicted), extended outside the rotating joint 40 and the rotatable portion 12.

Alternatively, if the internal channel 54 lacks the third section, the outlet opening 51 is made on the lower face of the attachment flange 400 and communicates directly with the grip device 3 (or with a pipe coaxial with the second section of the internal channel 54 which is extended inside the rotatable portion 12).

Advantageously, in addition, the rotating joint 40 comprises an upper flange 411 preferably made in a single body with the central shaft 41 and placed at the first end 41' of the latter.

Advantageously, the upper flange 411 also has circular plan, with diameter greater than that of the external jacket 42, so as to allow offering a greater contact surface between the rotating joint 40 and the support portion 11 of the end arm 10.

Advantageously, the grip device 3 comprises at least two jaws 31, and preferably three jaws 31, which are movable along a grip direction S thereof lying on a plane transverse, preferably orthogonal, to the rotation axis Z.

In particular, the jaws 31 are movable away from/close to each other during the movement of the grip device 3 between the clamping and release configurations.

The jaws 31 are advantageously placed at a first distance D1 from each other with the grip device 3 in the clamping configuration, and a second distance D2, greater than the first distance D1 with the grip device 3 in the release configuration.

Advantageously in addition, the grip device 3 comprises at least one hydraulic actuator 32, hydraulically connected to the outlet opening 51 of the internal distribution circuit 5, and mechanically connected to at least one of the jaws 31 in order to move the latter along the grip direction S.

Preferably, the grip device 3 is provided with one hydraulic actuator 32 for each jaw 31, still more preferably three hydraulic actuators 32.

According to the preferred embodiment of the present invention, in which the rotating joint 40 is provided with two internal chambers 54, the hydraulic actuators 32 are each provided with a cylinder 321 provided with two chambers, each of which hydraulically connected to a respective outlet opening 51 of the internal distribution circuit 5 and is intended to receive the pressurized liquid in order to activate one configuration or the other (clamping or releasing), and a slidable piston 320 within the cylinder 321 and interposed to delimit the aforesaid two chambers.

Advantageously, the piston 320 of the hydraulic actuator 32 is movable inside the cylinder 321 parallel to the grip direction S along which the corresponding jaw 31 is moved.

Advantageously, each outlet opening 51 is connected to a branch, from which three channels are extended, one for each hydraulic actuator 32, in a manner such that the pressure is equally distributed and the movement of the jaws 31 is synchronous.

In operation, in order to move the jaws 31 from the release configuration to the clamping configuration, the pump of the actuation means 4 pumps the liquid through one of the two internal chambers 54 of the internal distribution circuit 5, reaching each first chamber in the cylinders 321 of the linear actuators 32. The pressure exerted by the liquid on the piston 320 moves the latter in a first sense, and the motion of the piston 320 is transmitted to the motion transfer means, which in turn actuate the corresponding jaws 31 in translation along the grip direction S.

At the end of the movement of the piece 100, in order to bring the jaws 31 back from the clamping configuration to the release configuration, the pump interrupts the pumping of the pressurized liquid into the internal channel 54 connected to the first chambers of the cylinders 321, and starts to pump the liquid into the internal channel 54 connected to the second chambers of the cylinders 321, so as to actuate the piston 320 to slide along a second sense opposite the first sense, and to guide the jaws 31 apart through the motion transformation means.

Alternatively, in the embodiment in which the rotating joint 40 is only provided with an internal channel 54, the pressurized liquid will be pumped into one of the two chambers, preferably in order to activate the clamping configuration, and the hydraulic actuator 32 is advantageously provided with elastic return means in order to bring the grip device 3 back into the release configuration at the end of the supply of the pressurized operative liquid, in particular at the end of the processing of the piece 100.

Advantageously, the hydraulic actuator 32 is misaligned with respect to the corresponding jaw 31 to which it is connected, in a manner so as to reduce the vertical bulk of the grip device 3, allowing the placement of the hydraulic actuator 32 laterally with respect to the jaw 31, as is visible in figure 6.

In such situation, the grip device 3 is advantageously provided with motion transfer means, configured for receiving the motion imparted by each hydraulic actuator 32 and transferring it to the corresponding jaw 31. More in detail, the motion transfer means comprise at least one bracket 35, which is extended along a main extension direction which is substantially orthogonal to the extension axis X and to the grip direction S. The bracket 35 is advantageously mechanically connected, on one side, to a corresponding piston 320 of the hydraulic actuator 32, and on the other side to the corresponding jaw 31.

Advantageously, the jaws 31 comprise a support body 310 which is extended substantially parallel to the extension axis X and is extended below the hydraulic actuator 32 (and below the possible bracket 35), between an upper end connected to the piston 320 of the actuator 32, and an opposite lower end. In addition, the jaw 31 comprises a grip portion 311, which is fixed at the lower end of the support body 310 and is extended substantially orthogonal to the latter, parallel to the grip direction S. In particular, the grip portion 311 of each jaw 31 is preferably shaped as a function of the geometry of the piece 100 to be machined, and is advantageously fixed by means of screws or bolts to the support body 310 in order to allow an easy substitution as a function of the piece 100 to be machined.

Advantageously, each jaw 31 is slidably mounted on the rotatable portion 12, and in particular on the casing in which part of the grip device 3 is housed. More in detail, the robot 1 comprises slide guides, interposed between the jaws 31 (or movable elements connected to the latter) and the rotatable portion (in particular the casing).

For example, the casing is provided with guide channels which are slidably engaged by slide elements which are fixed to the motion transfer means, in such case to the guide block, although it is possible to fix such elements directly to the bracket 35 or even to the support body 310 of the jaw 31.

More in detail, each slide element is slidable along the corresponding guide channel along a direction parallel to the grip direction S, in order to guide the movement of the jaw 31 following the actuation of the hydraulic actuator 32 in a stable and precise manner.

Advantageously, the grip device 3 is provided with motion synchronization means, which comprise multiple cams 33, each of which connected, in particular pivoted, on one side to a corresponding jaw 31, and on the other side to a common support disc. Preferably, the support disc lies on a plane orthogonal to the extension axis X.

In particular, the support disc is mounted, preferably by means of a support shaft, to the rotatable portion 12 of the articulated arm 10, preferably to the casing. Advantageously, the support disc is mounted idle on the casing and is fee to rotate with respect to the latter, as is better described hereinbelow.

More in detail, the support disc is provided with multiple hinging holes, one for each cam 33, at each of which one side of the cam 33 being hinged, while the other side of the same cam 33 is, as set forth above, hinged to the corresponding jaw 31 (in particular to the bracket 35).

Advantageously, such motion synchronization means ensure a synchronous movement of the jaws 31, since they allow the different jaws 31 to be automatically moved in the event in which one (or more) jaws 31 are moved independently with respect to the others, so as to allow an improved centering of the jaws 31 on the object to be grasped and an improved adaptation to the dimensions and to the geometry of the piece 100 without requiring manual adjustments.

In particular, operatively, when a jaw 31 is moved, the corresponding cam 33 (at its side connected to the jaw 31) is moved parallel to the grip direction S, and this determines the rotation of the opposite side of the cam 33 (connected to the common support disc) which is also brought into rotation, determining a consequent rotation of all the cams 33 connected thereto and the consequent movement of the other jaws 31 along the respective grip directions S.

Advantageously in addition, the articulated robot 1 comprises a pressurized air source, adapted to generate compressed air, and a dispensing nozzle 7, mounted on the rotatable portion 12 of the terminal arm 10, connected in fluid relationship with the pressurized air source, and oriented at least towards the grip device 3 in order to blow the compressed air to the exterior.

Advantageously, the rotating joint 40 comprises an air connection circuit 8 defined by the central shaft 41 and by the external jacket 42 and extended between at least one inlet opening 80, which is made on a ring 420 of the external jacket 42 and is connected in fluid relationship with the source of compressed air, and at least one outflow opening 81, which is made on the central shaft 41 and is connected in fluid relationship con the dispensing nozzle 7.

In particular, the pressurized air source comprises a compressor, which is advantageously mounted on the base platform of the support structure 2, and a first compressed air duct, which air connects the compressor with the inlet opening 80.

Advantageously, the air connection circuit 8 is extended through the external jacket 42 and the central shaft 41 analogous to that described for the internal distribution circuit 5 of the pressurized liquid.

Advantageously, the pressurized air is then conveyed to the dispensing nozzle 7 by means of an external duct which is extended from the outflow opening 81 made on the lateral edge of the attachment flange 400, or, alternatively, is axially conveyed from the lower face of the attachment flange 400 towards the dispensing nozzle 7.

The pressurized air is directed centrally at the outlet, preferably at the self-centering element, both towards the piece 100, and towards the bearings (brass bearings) that facilitate the rotation of the rotatable portion of the terminal arm 10, in order to move away from the articulated robot 1 most of the residues generated during the processing of the piece 100.

The invention thus conceived therefore attains the pre-established objects.

## Claims

1. Articulated robot configured for moving pieces (100) to be machined, comprising:
- a support structure (2);
- a terminal arm (10), which is extended along an extension axis (X) between a first end (10'), constrained to said support structure (2), and an opposite second end (10");
- a grip device (3), with hydraulic actuation, mounted on the second end (10") of said terminal arm (10);
- hydraulic actuation means (4), operatively connected to said grip device (3) and arranged for actuating, by means of a pressurized liquid, said grip device (3) to pass between a clamping configuration, in which said grip device (3) grasps one said piece (100), and a release configuration, in which said grip device (3) releases said piece (100);
said terminal arm (10) comprising:
- a support portion (11), which is mechanically connected, at said first end (10'), to said support structure (2) by means of at least one first articulation (20);
- a rotatable portion (12), which is rotatably constrained to said support portion (11) around a rotation axis (Z) substantially parallel to said extension axis (X), and carries said grip device (3) mounted thereon and at said second end (10");
- at least one actuation motor mechanically connected to said rotatable portion (12) in order to actuate it to rotate around said rotation axis (Z);
- a rotating joint (40), which mechanically connects the support portion (11) of said terminal arm (10) to the rotatable portion (12) of said terminal arm (10) and hydraulically connects said hydraulic actuation means (4) to said grip device (3) in order to allow the flow of said liquid between said actuation means (4) and said grip device (3);
in which said rotating joint (40) comprises:
- a central shaft (41), which is extended longitudinally along said rotation axis (Z) between a first end (41') connected to said actuation motor and a second end (41") fixed to said rotatable portion (12), and actuatable by said actuation motor to rotate around said rotation axis (Z);
- an external jacket (42) fixed to said support portion (11) and placed around said central shaft (41) coaxial with said rotation axis (Z), and such central shaft (41) is rotatably inserted in said external jacket (42) in order to be able to rotate around said rotation axis (Z);
- an internal distribution circuit (5) susceptible of being traversed by said operating liquid and extended through said external jacket (42) and said central shaft (41) between at least one inlet opening (50), which is made on said external jacket (42) and is hydraulically connected to said actuation means (4), and at least one outlet opening (51), which is made on said central shaft (41) and is hydraulically connected to said grip device (3);
said external jacket (42) comprising multiple rings (420), which are placed, coaxial to said rotation axis (Z), aligned one after the other along said rotation axis (Z) and sealingly stacked one with the next;
wherein each said ring (420) is provided with an internal annular surface (421) directed towards said central shaft (41) and an external annular surface (422) opposite said internal annular surface (421);
in which at least one of said rings (420) is provided with said at least one inlet opening (50) which is extended in a through manner between said external annular surface (422) and said internal annular surface (421);
in which said central shaft (41) is provided with a lateral surface (410) which delimits, with the internal annular surface (421) of said ring (420), at least one annular chamber (53) of said internal distribution circuit (5) connected to said inlet opening (50);
in which said internal distribution circuit (5) comprises an internal channel (54) which is extended between an internal opening, made on the lateral surface (410) of said central shaft (41) and connected to said annular chamber (53), and said at least one outlet opening (51).

2. Robot according to claim 1, **characterized in that** said rotating joint (40) comprises multiple annular gaskets (44), each of which interposed between two said adjacent rings (420) and annularly placed in abutment against said central shaft (41).

3. Robot according to claims 2, **characterized in that** each said ring (420) is extended along said rotation axis (Z) between a first annular face (420A) and a second annular face (420B), and is provided with a steplike annular seat (423) made on said first annular face (420A), facing said lateral surface (410) and having the corresponding said annular gasket (44) housed therein.

4. Robot according to any one of the preceding claims, **characterized in that** the external jacket (42) of said rotating joint (40) comprises:
- two end rings (425), between which said rings (420) are placed;
- tie rod means (6) placed to mechanically connect said two end rings (425) and adapted to pull end rings (425) towards each other, retaining said rings (420) packed between said end rings (425).

5. Robot according to claim 4, **characterized in that** said tie rod means (6) comprise at least multiple retention rods (60), each of which extended between two opposite ends (60', 60") fixed to the corresponding said end rings (425); in which each said ring (420) is provided with multiple passage holes, extended in a through manner parallel to said rotation axis (Z), and traversed by a corresponding said retention rod (60).

6. Robot according to claim 4 or 5, **characterized in that** said rotating joint (40) comprises at least two bearings (45), each of which placed around said rotation axis (Z) and interposed between the corresponding said end ring (425) and said central shaft (41).

7. Robot according to any one of the preceding claims, **characterized in that** said rotating joint (40) comprises at least one attachment flange (400), which is fixed to the second end (41") of said central shaft (41), carries said grip device (3) mounted thereon and is extended, transverse to said rotation axis (Z), with width greater than the diameter of said external jacket (42).

8. Robot according to any one of the preceding claims, **characterized in that** said grip device (3) comprises:
- at least two jaws (31) movable along a grip direction (S) lying on a plane transverse to said rotation axis (Z);
said jaws (31) being placed at a first distance (D1) from each other with said grip device (3) in said clamping configuration, and a second distance (D2), greater than said first distance (D1) with said grip device (3) in said release configuration;
- at least one hydraulic actuator (32), hydraulically connected to the outlet opening (51) of said internal circuit (5), and mechanically connected to said jaws (31) in order to move said jaws (31) along said grip direction (S).

9. Robot according to any one of the preceding claims, **characterized in that** it comprises:
- a pressurized air source, adapted to generate compressed air;
- a dispensing nozzle (7), mounted on the rotatable portion (12) of said terminal arm (10), connected in fluid relationship with said pressurized air source, and oriented at least towards said grip device (3) in order to blow said compressed air to the exterior;
in which said rotating joint (40) comprises an air connection circuit (8) defined by said central shaft (41) and by said external jacket (42) and extended between at least one inlet opening (80), which is made on a ring (420) of said external jacket (42) and is connected in fluid relationship with said compressed air source, and at least one outflow opening (81), which is made on said central shaft (41) and is connected in fluid relationship with said dispensing nozzle (7).
